Europäisches Patentamt

European Patent Office

Office européen des brevets

(11) Publication number: **0 223 411**
**A2**

# EUROPEAN PATENT APPLICATION

(21) Application number: **86308012.3**

(22) Date of filing: **15.10.86**

(51) Int. Cl.⁴: **C01B 13/11**

(30) Priority: **15.10.85 CA 492928**

(43) Date of publication of application:
**27.05.87 Bulletin 87/22**

(84) Designated Contracting States:
**AT BE CH DE ES FR GB GR IT LI LU NL SE**

(71) Applicant: **ZONTEC TREATMENT SYSTEMS LIMITED**
**12 Main Street**
**Jasper Ontario(CA)**

(72) Inventor: **Connerty, William C.**
**218 Frost Street Smiths Falls**
**Ontario K7A 4E5(CA)**

(74) Representative: **Brereton, Paul Arthur et al**
**REDDIE & GROSE 16 Theobalds Road**
**London WC1X 8PL(GB)**

(54) **Ozone purification system and apparatus.**

(57) Arrangements for purifying water or air with ozone produced by corona discharges created by high voltage electricity. The arrangements use various configurations of electrode structures, each comprising a dielectric (14) of aluminum oxide having one side covered with a conductive foil (16) and the other side covered with a conductive screen - (15).

FIG. 1

## OZONE PURIFICATION SYSTEM AND APPARATUS

This invention relates to ozone generators.

It is known that ozone is very effective at eliminating odours and killing bacteria and viruses. One method of generating ozone is by means of a corona discharge created by high voltage electricity. The present invention relates to ozone generators of this type.

One problem with corona discharge generators is that they generate considerable heat, which adversely affects their ability to generate ozone.

We have found that this heat can be eliminated by using an electrode structure having a dielectric composed of aluminium oxide which has not only a high dielectric constant but also is a good conductor of heat. Furthermore, aluminium oxide is physically stable and strong in both flexure and tension and is unaffected by water. Heat can be removed from the aluminium oxide dielectric by either air or water or other fluids. To form the complete electrode structure, the dielectric is covered on one side with a conductive screen or perforated plate and on the other side with a conductive foil.

A plurality of electrode structures may be incorporated in an ozone generator to produce copious amounts of ozone which can be used for various applications, such as air purification or water purification. The ozone may be mixed with air or water and directed over food in a cooler or salad bar to kill bacteria so that the food stays fresh for a long time. It could also be used to help sterilize hospital equipment or by dentists to help sterilize a patient's tooth.

Thus, in accordance with a broad aspect of the present invention, there is provided an electrode structure for a corona discharge generator comprising a dielectric of aluminium oxide having one side covered with a conductive foil and the other side covered with a conductive screen.

The conductive foil may be a layer of aluminium foil or a metallized layer deposited on one side of the dielectric. Instead of a conductive screen, one could use a conductive plate with numerous perforations. The edges of the dielectric may be embedded in thermosetting plastic to prevent flashover between the screen and ground plate.

Figure 1 is a cross-sectional diagram of an embodiment of an ozone generator according to the invention.

Figure 2 is an external view of the embodiment of Figure 1.

Figure 3 is a cross-sectional view of an embodiment according to the invention for adding ozone to air.

Figures 4 and 5 are axial and transverse sectional views, respectively, of an embodiment of the invention using three sets of electrode structures.

Figures 6 and 7 are axial and transverse sectional views, respectively, of an embodiment of the invention which is water cooled.

Figure 8 is an elevational view, partly in section, of an apparatus according to the invention for ozonating water.

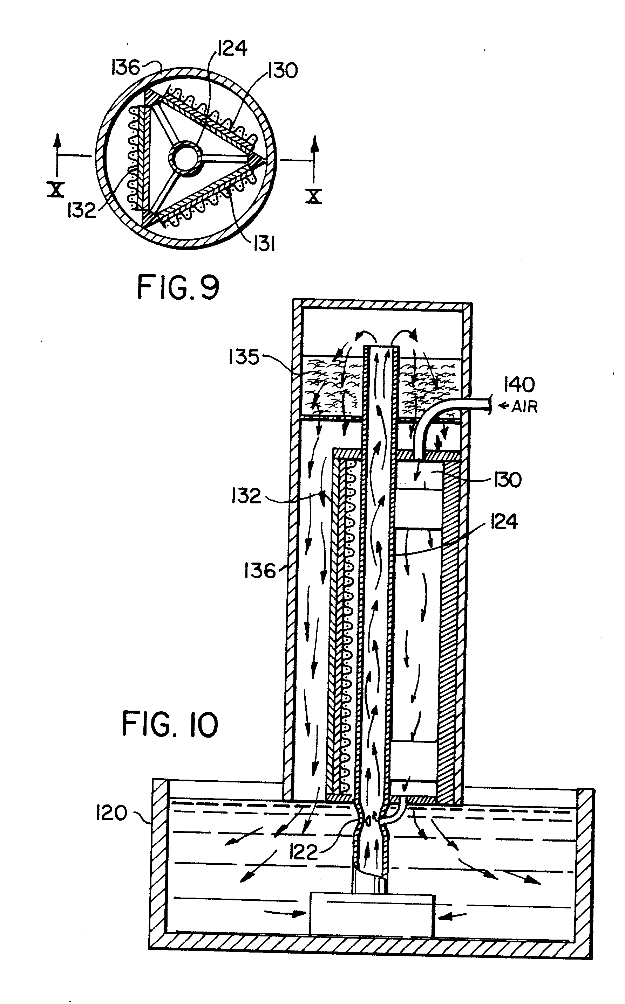

Finally, Figures 9 and 10 are transverse and axial sectional views, respectively, of another embodiment for adding ozone to water to purify it.

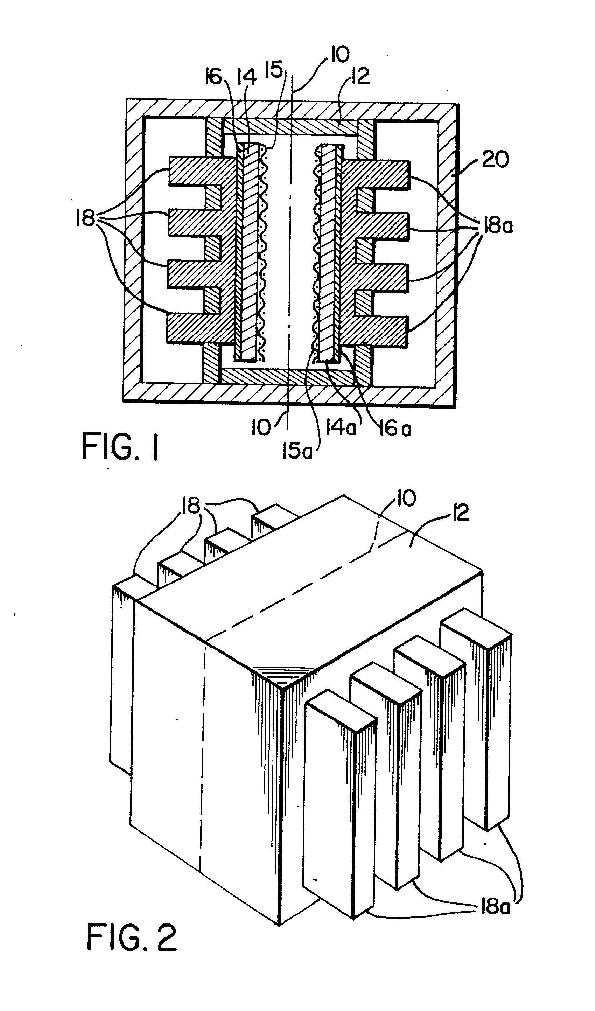

Figure 1·is a schematic diagram of an embodiment of an ozone generator according to the invention which has two electrode structures spaced apart on opposite sides of a center line 10 within an enclosure 12 of insulating material such as plastic. Each electrode structure comprises a dielectric 14, 14a with inwardly facing screens 15, 15a and outwardly facing ground plates 16, 16a. The ground plates may be formed of metal foil or metallized layers on the dielectrics. Cooling fins 18, 18a are placed in intimate contact with the ground plates. The cooling fins may be surrounded by an enclosure 20 through which may be passed water or air to remove heat generated when ozone is produced by applying high voltage AC (3000-17,000 VAC, typically 7500 VAC) between the screen and ground plate of each electrode structure.

Figure 2 is an external view of the embodiment of Figure 1 showing the enclosure 12 and projecting cooling fins. The enclosure 12 is seen to be formed of two pieces joined together at centerline 10.

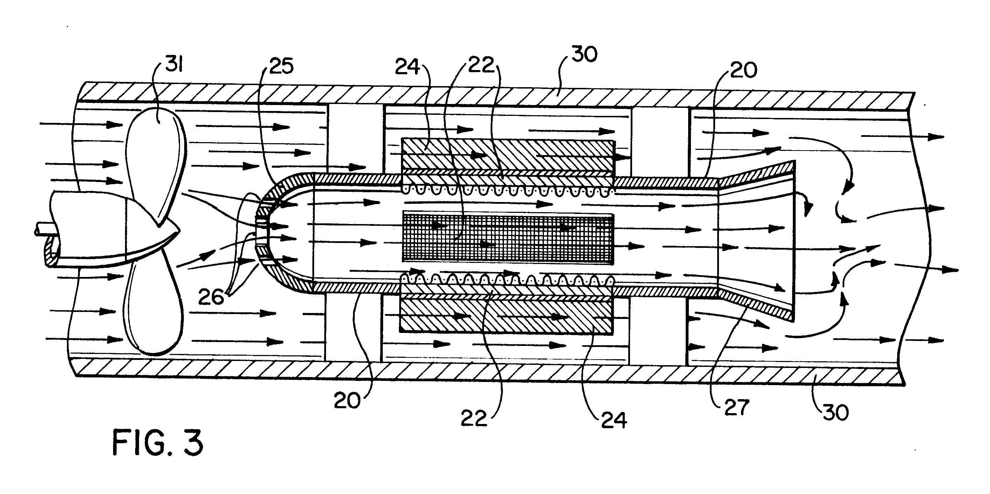

Figure 3 shows an embodiment of the invention which can be used to add ozone to air. The apparatus comprises a tubular member 20 provided with a plurality of electrode structures 22 arranged with their screen electrodes inside the tubular member and their ground electrodes on the outside. Cooling fins 24 are attached to the ground electrodes. The tubular member 20 is provided at one end with a nose cone 25 having openings 26. The other end of the tubular member is provided with deflectors 27. this structure is enclosed by a second tubular member 30. A fan 31 is arranged to force air through the tube 30, some of which is forced through the openings 26 and passes through the tube 20 where it picks up ozone, it being understood that the electrodes are energized by a high-voltage AC source so that they produce ozone. Air mixed with ozone leaves the tube 20 and mixes with air passing through tube 30 on the outside of tube 20. The deflectors 27 cause turbulent air flow, thus thoroughly mixing the ozone leaving tube 20 with the air in tube 30.

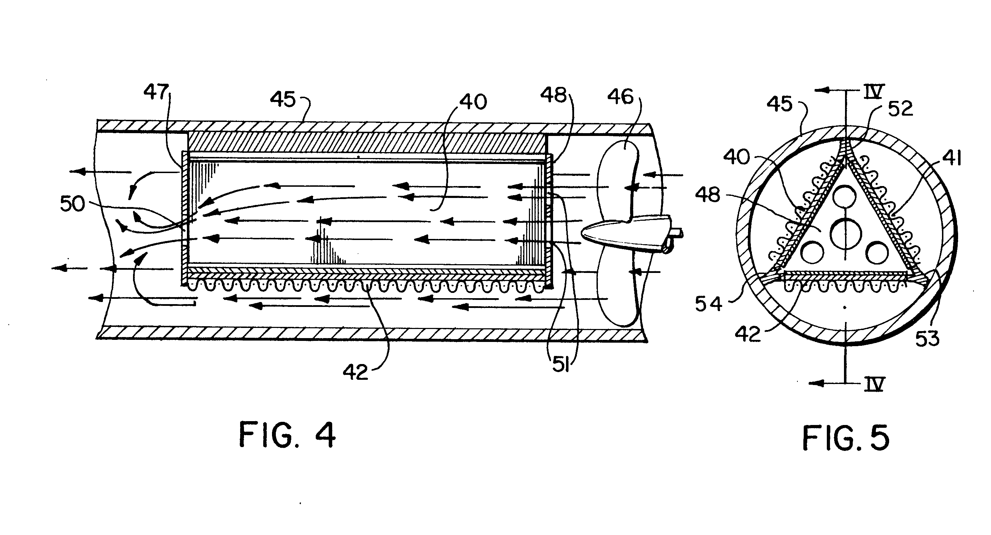

Figures 4 and 5 illustrate another embodiment of the invention in which three sets of electrode structures 40, 41 and 42 are arranged in a triangular configuration within a tube 45 through which air is forced by a fan 46. The ends of the triangular configurations are covered by end caps 47, 48 having holes such as shown at 50, 51 through which air can flow.

Ozone is generated in the air flowing between the electrode structures and the tube 45 and is mixed with air flowing inside the space between the electrode structures through the end caps 47 and 48. Turbulence causes thorough mixing of the air and ozone.

The edges of the electrode structures are secured together by plastic members 52, 53, and 54.

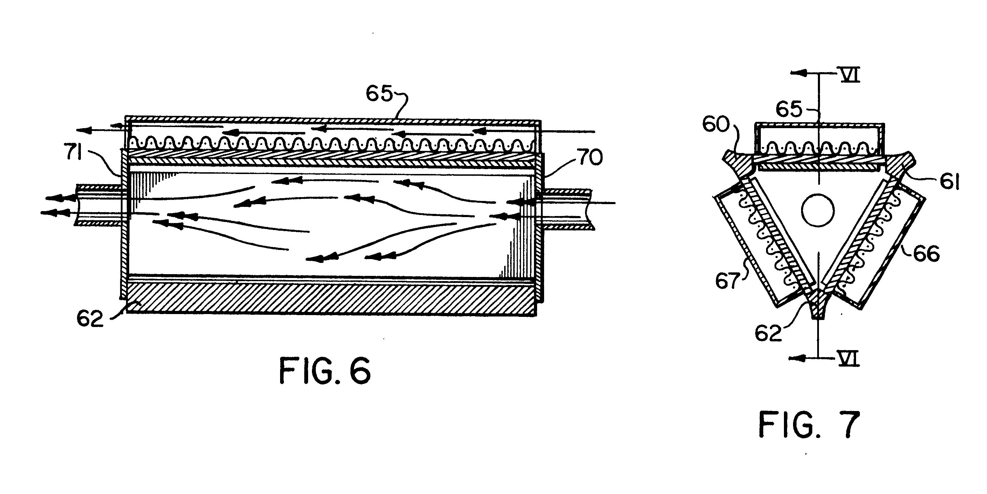

Figures 6 and 7 show an embodiment in which water flows through the space between the electrodes and air flows on the outside. As seen in Figure 7, the electrode structures are arranged in a triangular configuration with their ground electrodes facing inward, the edges of the electrodes being secured in plastic members 60, 61 and 62. The outer surfaces of the electrode structures, carrying the screen electrodes, are surrounded by hollow enclosures 65, 66 and 67 which carry the air in which the ozone is generated. Cooling water is carried to the space between the electrode structures through end caps 70, 71.

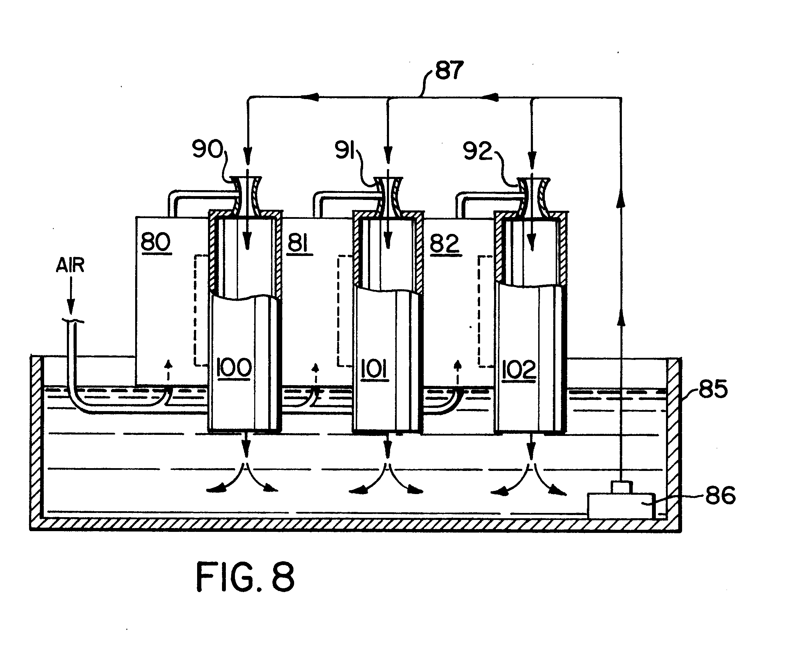

Figure 8 shows an arrangement for purifying water. The arrangement comprises a plurality of ozone generators 80, 81 and 82 disposed above a tank of water 85. Water is pumped from the tank by a pump 86 to a distribution line 87 from which it is discharged via venturis 90, 91 and 92 to mixing chambers 100, 101 and 102, the bottom ends of which open into tank 85. Air is injected into the bottom ends of the ozone generators and, after picking up ozone, is discharged adjacent the venturis where it is picked up by the water and carried into the mixing chambers 100, 101, 102. The ozone kills bacteria in the water which passes back to the tank 85.

Figures 9 and 10 illustrate another embodiment of apparatus for purifying water. In this embodiment, water is pumped from a tank 120 through a venturi 122 to a mixing tube 124. Ozone produced by electrode structures 130, 131 and 132 is sucked into the mixing tube 124 by the venturi 122. The mixture of water and ozone passes from the mixing tube 124 into a filter assembly 135 and then back to the tank 120 via the space between the electrode structures and outer tube 136. Passages 140 are provided for air to pass to the space between the electrode structures so that ozone can be generated. The filter 135 removes particles precipitated in the water after ozonation.

## Claims

1. An electrode structure for a corona discharge generator comprising a dielectric layer - (14) of aluminum oxide having one side covered with a conductive foil (16) and the other side covered with a conductive screen (15).

2. An ozone generator comprising a plurality of electrode structures as claimed in claim 1 arranged in an enclosure (12) with their screen sides facing inwardly, means for passing air through said enclosure (12), means for applying high voltage AC between the foils (16) and screens (15) of said electrodes, and means (18) for cooling said electrode structures.

3. An ozone generator as claimed in claim 2 wherein the means for cooling said electrode structures comprises cooling fins (18) secured to said foils (16).

4. An ozone generator as claimed in claim 3 wherein said foils (16) comprise metallized layers on said layers of dielectric (14).

5. An ozone generator as claimed in claim 4 wherein said enclosure comprises an elongated tube (20) disposed within an outer tube (30) so that ozone leaving said first-mentioned tube (20) is mixed with air in said outer tube (30).

6. An ozone generator as claimed in claim 5 wherein said first-mentioned tube (20) is provided with means (27) for creating turbulent air flow in said outer tube (30).

7. An ozone generator comprising a plurality of electrode structures (40, 41 and 42) as claimed in claim 1 arranged in an enclosure (45) with their screen sides facing outwardly, means (46) for passing air through said enclosure (45), means for applying high voltage electricity between the foils and screens of said electrodes, and means for cooling said electrode structures, said electrode structures being arranged in a triangular configuration.

8. An ozone generator as claimed in claim 7 wherein some air passes through the space enclosed by said electrode structures and some passes between the electrode structures and the enclosure.

9. An ozone generator as claimed in claim 2 and further comprising means (100, 101 and 102) for mixing ozonated air from said ozone generator - (80, 81 and 82) with water circulated by a pump - (86) from a tank (85).

10. An arrangement as claimed in claim 9 wherein said water is passed through a venturi - (90) which sucks ozonated air into the water.

FIG. 1

FIG. 2

FIG. 3

FIG. 5

FIG. 4

FIG. 7

FIG. 6

FIG. 8

0 223 411

FIG. 9

FIG. 10